# EUROPEAN PATENT SPECIFICATION

(11) **EP 1 688 526 B1**
(45) Date of publication and mention of the grant of the patent: **17.03.2010**
(21) Application number: 05256931.6
(22) Date of filing: 10.11.2005
(51) Int. Cl.: D06F 37/26, D06F 37/20

(54) **Tub for washing machines**
Laugenbehälter für Waschmaschine
Cuve pour lave-linge

(30) Priority: 04.02.2005 KR 2005010537
(43) Date of publication of application: 09.08.2006
(73) Proprietor: LG Electronics, Inc., Seoul 150-010 (KR)
(72) Inventor: Jy, Byoung Soo, Seoul 156-090 (KR)
(74) Representative: Camp, Ronald

(56) References cited:
- EP-A- 1 270 791
- EP-A- 1 426 477
- EP-A- 1 460 162
- US-A- 6 067 822

## Description

The present invention relates to a tub for washing machines. It more particularly relates to a tub for washing machines having a balance weight integrally formed at the tub. It still more particularly relates to arrangements which eliminate the necessity of providing additional fixing units for fixing the balance weight to the tub, whereby the tub and the balance weight are formed in a simple structure.

A washing machine is a machine that removes contaminants from clothes or bedclothes and the like (hereinafter referred to as "laundry") received in a drum using interaction of water and detergent. The washing machine performs washing, rinsing, spin-drying, and drying operations in succession to clean the laundry.

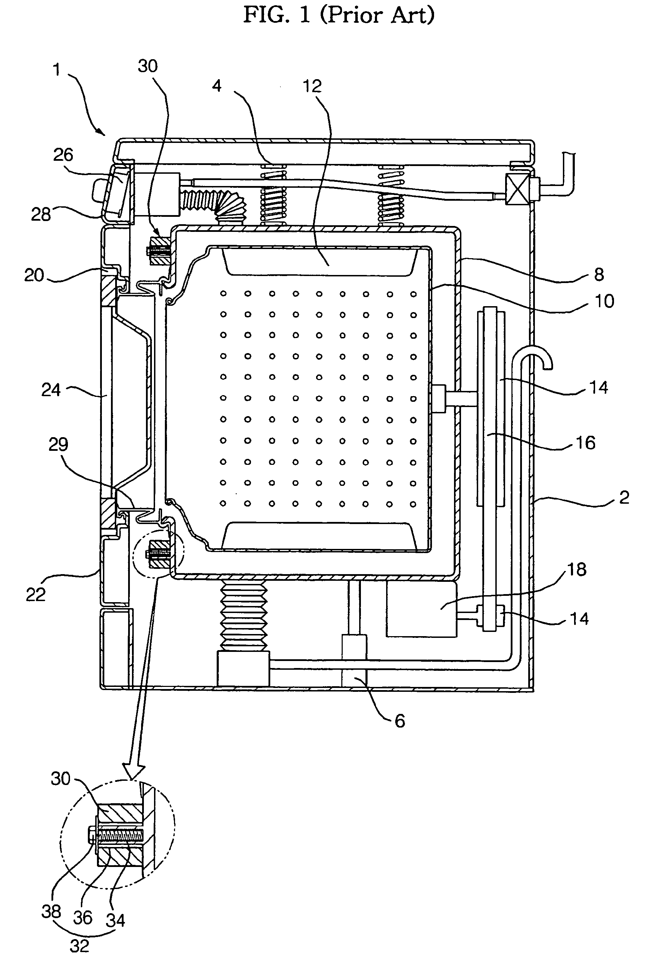

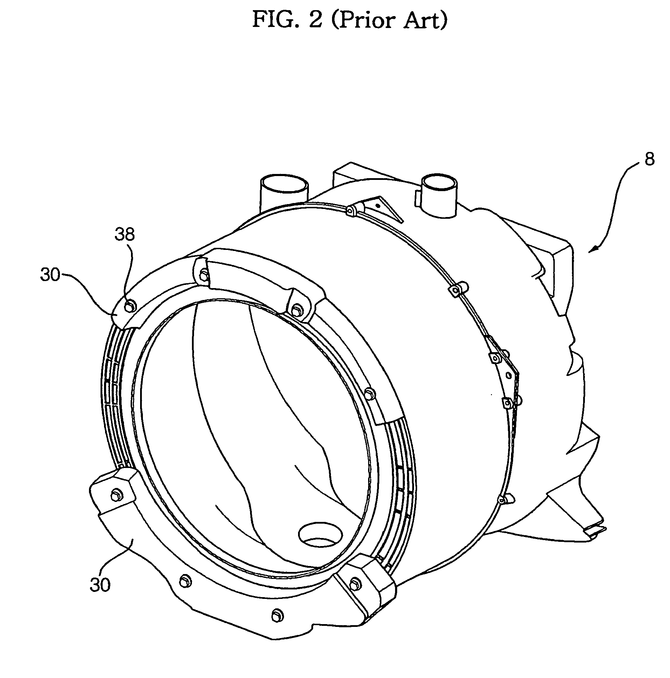

FIG. 1 is a sectional view illustrating an example of a drum type washing machine 1 with a conventional tub mounted therein, and FIG. 2 is a perspective view of the conventional tub of FIG. 1 illustrating a balance weight mounted at the conventional tub.

As shown in FIGS. 1 and 2, the conventional drum type washing machine 1 comprises: a cabinet 2 forming the outer appearance of the drum type washing machine 1; a tub 8 horizontally mounted in the cabinet 2 such that impact and vibration generated from the tub 8 are effectively absorbed by springs 4 and a damper 6; a drum 10 rotatably disposed in the tub 8 for washing laundry placed therein; a plurality of lifters 12 attached to the inside surface of the drum 10 for lifting the laundry to a predetermined height, when the drum 10 is rotated, such that the laundry falls from the predetermined height due to gravity; and a motor 18 mounted at the rear of the tub 8, the motor 18 being connected to a rotary shaft of the drum 10 via pulleys 14 and a belt 16.

At the front surface of the cabinet 2 is mounted a cabinet cover 22 having a laundry inlet/outlet hole 20 formed at the center thereof such that laundry can be put into or removed from the drum 10 through the laundry inlet/outlet hole 20. To the cabinet cover 22 is hingedly connected a door 24 for opening or closing the laundry inlet/outlet hole 20.

At the upper end of the cabinet cover 22 is mounted a control panel 28 having electric field parts 26 for controlling the operation of the drum type washing machine 1 mounted therein. Between the laundry inlet/outlet hole 20 and the inlet of the tub 8 is disposed a gasket 29 for reducing impact generated when the drum 10 is rotated and serving as a packing member for preventing leakage of washing water.

In addition, a balance weight 30 is attached to the front part of the tub 8 for eliminating unbalance in weight of the tub 8 due to the pulleys 14, the belt 16, and the motor 18.

The balance weight 30 is a heavy weight member, such as a concrete material or iron, which is injected into a mold and then hardened. The balance weight 30 is disposed along the front edge part of the tub 8. The balance weight 30 is securely fixed to the front edge part of the tub 8 by means of fixing units 32.

Each of the fixing units 32 comprises: a fixing boss 34 protruded forward from the front edge part of the tub 8; a through-hole 36 formed at the balance weight 30 such that the fixing boss 34 is inserted through the through-hole 36; and a fixing bolt 38 threadedly engaged with the fixing boss 34 for securely fixing the balance weight 30 to the front surface of the tub 8.

When laundry is put into the drum 10 of the drum type washing machine with the above-stated construction, and the drum type washing machine is operated, a rotating force of the motor 18 is transmitted to the drum 10 via the pulleys 14 and the belt 16, and therefore, the drum 10 is rotated. During the rotation of the drum 10, washing, rinsing, and spin-drying operations are performed in succession. At this time, back-and-forth, right-and-left, and up-and-down vibration is generated at the tub 8 due to the operation of the motor 18 and the drum 10. The vibration of the tub 8 is absorbed by elastic force of the springs 4 and damping force of the damper 6.

However, the conventional drum type washing machine with the above-stated construction has the following problems.

The balance weight 30 is separately manufactured, and is then attached to the front surface of the tub 8 by means of the fixing units 32. As a result, the number of parts is increased, and the manufacturing costs of the parts are increased. Furthermore, the balance weight attaching process is complicated.

Furthermore, the fixing bosses 34 of the fixing units 32 may be damaged due to the vibration of the tub 8 while the drum type washing machine 1 is operated, and therefore, the balance weight 30 may be accidentally separated from the tub 8.

Meanwhile, the tub 8 is vibrated back and forth, right and left, and up and down in the cabinet 2 while the drum type washing machine 1 is operated. For this reason, the drum type washing machine 1 is designed such that there is provided sufficient space around the tub 8 in order to prevent collision of the tub 8 with the cabinet 2.

In the drum type washing machine 1, however, the provision of sufficient space between the tub 8 and the cabinet cover 22 is difficult due to the balance weight 30. If sufficient space is provided between the tub 8 and the cabinet cover 22, the size of the drum type washing machine 1 is increased.

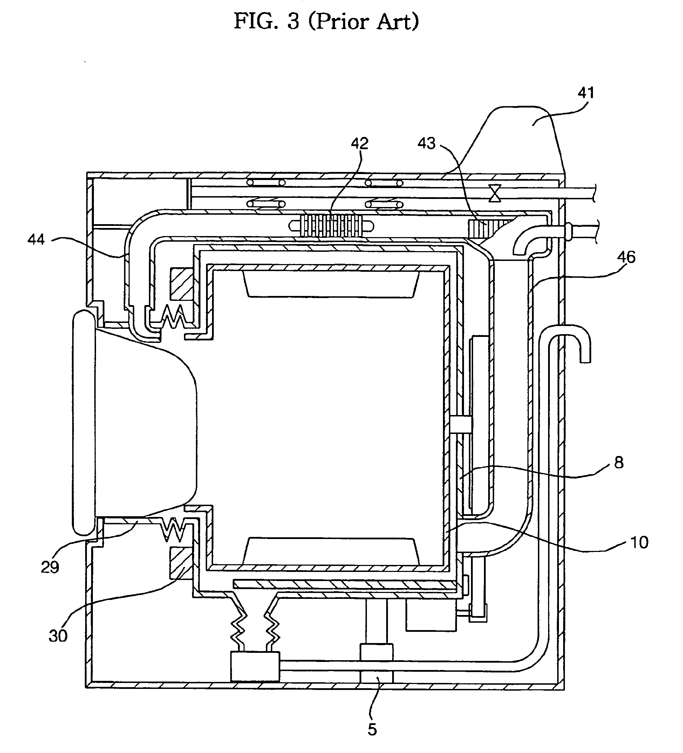

FIG. 3 is a sectional view illustrating another example of a drum type washing machine 40 with a conventional tub mounted therein. The drum type washing machine 40 shown in FIG. 3 is a drum type washing machine with drying function that is capable of performing washing, rinsing, spin-drying, and drying operations in succession.

It should be noted that the same or similar elements are denoted by the same reference numerals even though they are depicted in different drawings.

The conventional drum type washing machine with drying function 40 comprises: a control panel 41 mounted at the top of the washing machine; a drying duct 44 disposed on the tub 8 while one end of the drying duct 44 communicates with the upper part of the gasket 29, the drying duct 44 having a heater 42 and a blower 43 mounted therein; and a condensing duct 46, having one end connected to the lower part of the rear surface of the tub 8 and the other end connected to the other end of the drying duct 44, for condensing moisture contained air circulating in the washing machine. Other components of the drum type washing machine with drying function 40 are identical in construction and operation to those of the previously described drum type washing machine 1, and therefore, a detailed description thereof will not be given.

The air condensed in the condensing duct 46 is blown by the blower 43 and heated by the heater 42. As a result, the condensed air is changed into hot wind. The hot wind is supplied into the drum 10 through one end of the drying duct 44 to dry the laundry received in the drum 10.

In the conventional drum type washing machine with drying function 40, however, one end of the drying duct 44 as well as the balance weight 30 is disposed between the tub 8 and the cabinet cover 22. Consequently, the provision of an installation space for the drying duct 44 and the balance weight 30 is much more difficult.

EP-A-1 460 162 discloses a method for producing a container of washing liquid for a washing machine which involves introduction of materials for the ballast element and the relevant container parts into an injection molding tool.

The present invention seeks to provide an improved washing machine.

A first aspect of the invention provides a tub for washing machines, comprising: a tub body; a weight receiving part formed at the tub body; and a balance weight integrally formed at the weight receiving part by injection molding; **characterized in that** the weight receiving part is formed integrally at the outer circumferential surface of the tub body.

The balance weight may be made of a concrete material or a metal material having a low melting point.

The tub body may comprise: a front tub having an inlet formed at the front surface thereof and the rear surface of which is opened; and a rear tub attached to the rear surface of the front tub, the weight receiving part being formed at the front tub and/or the rear tub.

The weight receiving part may be defined by ribs protruded from the tub body.

The weight receiving part may comprise: a vertical rib protruded outward from the outer circumferential surface of the tub body while the vertical rib is perpendicular to the outer circumferential surface of the tub body; and a horizontal rib formed at the tip end of the vertical rib while the horizontal rib is parallel with the outer circumferential surface of the tub body.

The weight receiving part may be formed along the outer circumference of the tub body.

The weight receiving part may comprise: a vertical rib protruded outward from the outer circumferential surface of the tub body along the outer circumference of the tub body while the vertical rib is perpendicular to the outer circumferential surface of the tub body; and a horizontal rib protruded forward or rearward from the tip end of the vertical rib while the horizontal rib is parallel with the outer circumferential surface of the tub body.

The tub body may be mounted in a cabinet in a shock-absorbing fashion, and the weight receiving part has collapsed sections, which are opposite to both side surfaces of the cabinet, the collapsed sections being collapsed toward the tub body.

The horizontal rib may protrude from the tip end of the vertical rib further forward than the front surface of the tub body.

The tub body may be provided at the front surface thereof with an inlet, and the tub further comprises: a cylindrical rib disposed at the inlet of the tub body while the cylindrical rib is protruded forward from the tub body.

The tub may further comprise: a curling part formed at the tip end of the cylindrical rib, to which a gasket is connected, and the gasket is disposed between the inlet of the tub body and a laundry inlet/outlet hole of a cabinet cover disposed in front of the tub body.

The balance weight may comprise: a first weight disposed between the vertical and horizontal ribs and the outer circumferential surface of the tub body; and a second weight disposed between the vertical and cylindrical ribs and the front surface of the tub body, the second weight being integrally molded with the first weight.

The tub may further comprise: at least one motion preventing protrusion protruded from the front surface of the tub body for preventing motion of the balance weight.

Preferably, the at least one motion preventing protrusion is provided at the tip end thereof with a separation preventing extension for preventing the balance weight from being separated from the tub body.

The at least one motion preventing protrusion may comprise a plurality of motion preventing protrusions arranged at the front surface of the tub body in the circumferential direction while being spaced apart from one another.

The balance weight may be injected into the weight receiving part formed at one side of the tub body, and may then be hardened in the weight receiving part. As a result, the balance weight is integrally attached to the tub body, which eliminates the necessity of providing additional fixing units for fixing the balance weight to the tub body, and therefore, the balance weight and the tub are formed in a simple structure.

Embodiments of the invention will now be described by way of non-limiting example only, with reference to the drawings, in which:
FIG. 1 is a sectional view illustrating an example of a drum type washing machine with a conventional tub mounted therein;
FIG. 2 is a perspective view of the conventional tub of FIG. 1 illustrating a balance weight mounted at the conventional tub;
FIG. 3 is a sectional view illustrating another example of a drum type washing machine with a conventional tub mounted therein;
FIG. 4 is a sectional view illustrating a drum type washing machine with a tub according to a first preferred embodiment of the present invention mounted therein;
FIG. 5 is a perspective view illustrating a tub body of the tub for drum type washing machines according to the first preferred embodiment of the present invention;
FIG. 6 is a perspective view illustrating the tub for drum type washing machines according to the first preferred embodiment of the present invention;
FIG. 7 is a sectional view illustrating a drum type washing machine with a tub according to a second preferred embodiment of the present invention mounted therein;
FIG. 8 is a perspective view illustrating the tub for drum type washing machines according to the second preferred embodiment of the present invention;
FIG. 9 is a sectional view illustrating a drum type washing machine with a tub according to a third preferred embodiment of the present invention mounted therein; and
FIG. 10 is a perspective view illustrating the tub for drum type washing machines according to the third preferred embodiment of the present invention.

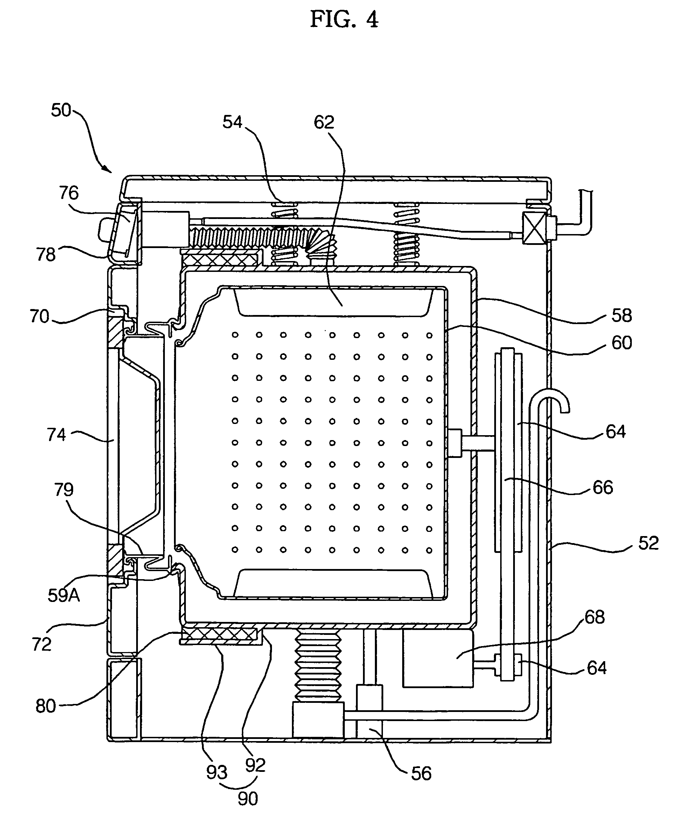

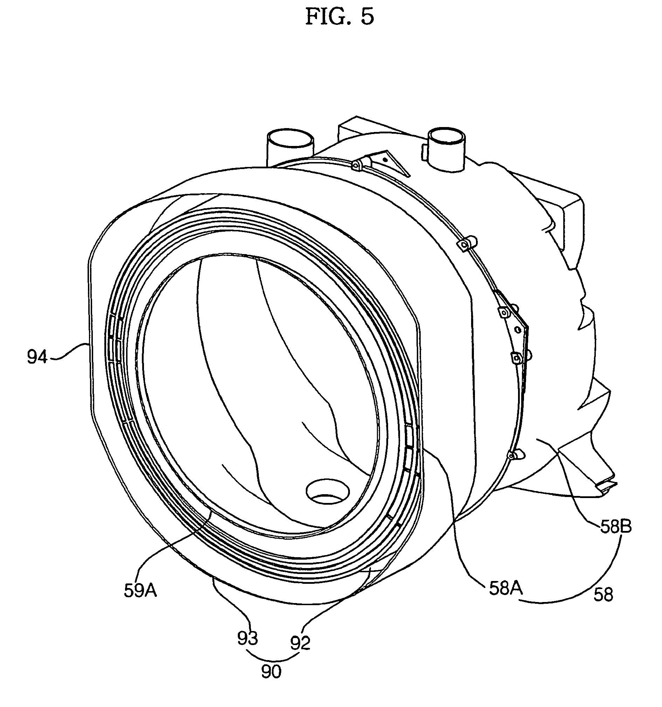

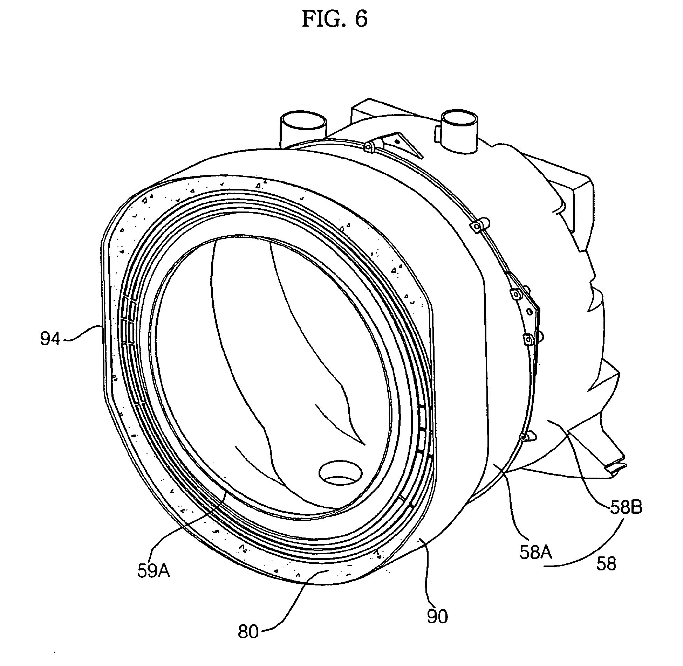

As shown in FIGS. 4 to 6, the drum type washing machine 50 according to the first embodiment comprises: a cabinet 52 forming the outer appearance of the drum type washing machine 50; a tub body 58 horizontally mounted in the cabinet 52 such that impact and vibration generated from the tub 8 are effectively absorbed by springs 54 and a damper 56; a drum 60 rotatably disposed in the tub body 58 for washing laundry placed therein; a plurality of lifters 62 attached to the inside surface of the drum 60 for lifting the laundry to a predetermined height, when the drum 60 is rotated, such that the laundry falls from the predetermined height due to gravity; a motor 68 mounted at the rear of the tub body 58, the motor 68 being connected to a rotary shaft of the drum 60 via pulleys 64 and a belt 66; and a balance weight 80 integrally formed at the tub body 58 for eliminating unbalance in weight of the tub body 58.

At the front surface of the cabinet 52 is mounted a cabinet cover 72 having a laundry inlet/outlet hole 70, through which laundry can be put into or removed from the drum 60. To the cabinet cover 72 is hingedly connected a door 74 for opening or closing the laundry inlet/outlet hole 70.

At the upper end of the cabinet cover 72 is mounted a control panel 78 having electric field parts 76 for controlling the operation of the drum type washing machine 50 mounted therein. Between the laundry inlet/outlet hole 70 and the inlet of the tub body 58 is disposed a gasket 79 for reducing impact generated when the drum 60 is rotated and serving as a packing member for preventing leakage of washing water.

At the outer circumferential surface of the tub body 58 is formed a weight receiving part 90, in which the balance weight 80 is received by injection molding such that unbalance in weight of the tub body 58 due to the pulleys 64, the belt 66, the motor 68, and other parts is eliminated by the balance weight 80.

The tub body 58 comprises: a front tub 58A having an inlet formed at the front surface thereof and the rear surface of which is opened; and a rear tub 58B attached to the rear surface of the front tub 58A and the front surface of which is opened. In the present embodiment, the weight receiving part 90 is formed at the front tub 58A. However, in a modification it may additionally or alternatively be formed at the rear tub 58B.

In the following description, the weight receiving part 90 is formed at the front tub 58A.

At the inlet of the front tub 58A is formed a curling part 59A, to which the gasket 79 is connected. The curling part 59A is bent in such a manner that the curling part 59A is protruded forward a predetermined height from the inlet of the front tub 58A and is then extended outward.

The balance weight 80 is a heavy weight member, such as a concrete material or a metal material. Preferably, the metal material has a low melting point. Specifically, the balance weight 80 is injected into the weight receiving part 90 in a fluid state, and is then hardened in the weight receiving part 90. As a result, the balance weight 80 is integrally attached to the tub body 58.

Meanwhile, the weight receiving part 90 is formed at the outer circumferential surface of the front tub 58A in the shape of a rib. Also, the weight receiving part 90 is formed along the outer circumference of the front tub 58A.

Specifically, the weight receiving part 90 comprises: a vertical rib 92 protruded outward from the outer circumferential surface of the front tub 58A along the outer circumference of the front tub 58A while the vertical rib 92 is perpendicular to the outer circumferential surface of the front tub 58A; and a horizontal rib 93 protruded forward or rearward from the tip end of the vertical rib 92 while the horizontal rib 93 is parallel with the outer circumferential surface of the front tub 58A.

The balance weight 80 is injected into the space defined between the vertical and horizontal ribs 92 and 93 and the outer circumferential surface of the front tub 58A, and is then hardened in the space. As a result, the ringshaped balance weight 80 is integrally attached along the outer circumferential surface of the front tub 58A.

The weight receiving part 90 has collapsed sections 94, which are opposite to both side surfaces of the cabinet 52. Specifically, the collapsed sections 94 of the weight receiving part 90 are collapsed toward the tub body 58 to prevent collision of the tub body 58 and the cabinet 52.

The collapsed sections 94 of the weight receiving part 90 are vertically arranged such that the collapsed sections 94 of the weight receiving part 90 are parallel with the side surfaces of the cabinet 52.

The manufacturing process, operation, and effects of the tub for drum type washing machines with the above-stated construction according to the first embodiment will be described hereinafter in detail.

First, the front tub 58A is molded through injection molding of synthetic resin such that the weight receiving part 90 is formed at the outer circumferential surface of the front tub 58A along the outer circumference of the front tub 58A. Similarly, the rear tub 58B is also molded through injection molding of synthetic resin.

The opened front surface of the rear tub 58B is connected to the opened rear surface of the front tub 58A. As a result, the tub body 58 is completed.

A concrete material or a metal material having a low melting point is injected into the weight receiving part 90 of the completed tub body 58 in a fluid state, and is then hardened in the weight receiving part 90. As a result, the balance weight 80 is integrally attached to the front tub 58A along the outer circumferential surface of the front tub 58A.

Specifically, the balance weight 80 is formed in the shape of a ring, which surrounds the outer circumferential surface of the front tub 58A.

Consequently, the balance weight 80 is stably and securely attached to the tub body without the provision of additional fixing units. Furthermore, the molding process of the balance weight 80 and the fixing process of the balance weight 80 are simultaneously performed, and therefore, the assembly of the tub body 58 and the balance weight 80 is easily accomplished.

When the drum type washing machine 50 with the tub, to which the balance weight is integrally attached, mounted therein is operated, an appropriate amount of washing water is supplied into the tub body 58, and a rotating force of the motor 68 is transmitted to the drum 60 via the pulleys 64 and the belt 66, and therefore, the drum 60 is rotated. During the rotation of the drum 60, washing, rinsing, and spin-drying operations of laundry placed in the drum 60.

As the motor 68 and the drum 60 are rotated as described above, the tub body 58 is vibrated back and forth, right and left, and up and down. However, the vibration of the tub body 58 is absorbed by elastic force of the springs 54 and damping force of the damper 56.

According to the present invention, the balance weight is not disposed at the front surface of the tub body 58, which is distinguished from the conventional art. Consequently, the provision of sufficient space between the tub body 58 and the cabinet cover 72 is easily accomplished.

Since the sufficient space is provided between the tub body 58 and the cabinet cover 72, a collision of the front surface of the tub body 58 and the cabinet cover 72 due to the vibration of the tub body 58 is effectively prevented. In the case of a drum type washing machine with a drying function, the drying duct can easily be disposed between the tub body 58 and the cabinet cover 72.

Although the weight receiving part 90 and the balance weight 80 are disposed along the outer circumferential surface of the front tub 58A, the collapsed sections 94 of the weight receiving part 90 and the balance weight 80 are collapsed toward the tub body 58. Consequently, the provision of space between the tub body 58 and the cabinet cover 52 can easily be accomplished.

Specifically, the height of the collapsed sections 94 of the weight receiving part 90 and the balance weight 80 from the tub body 58 is lower than that of other sections of the weight receiving part 90 and the balance weight 80 from the tub body 58. Consequently, the distance between the opposite side surfaces of the cabinet 52 and the tub body 58 is not greatly decreased.

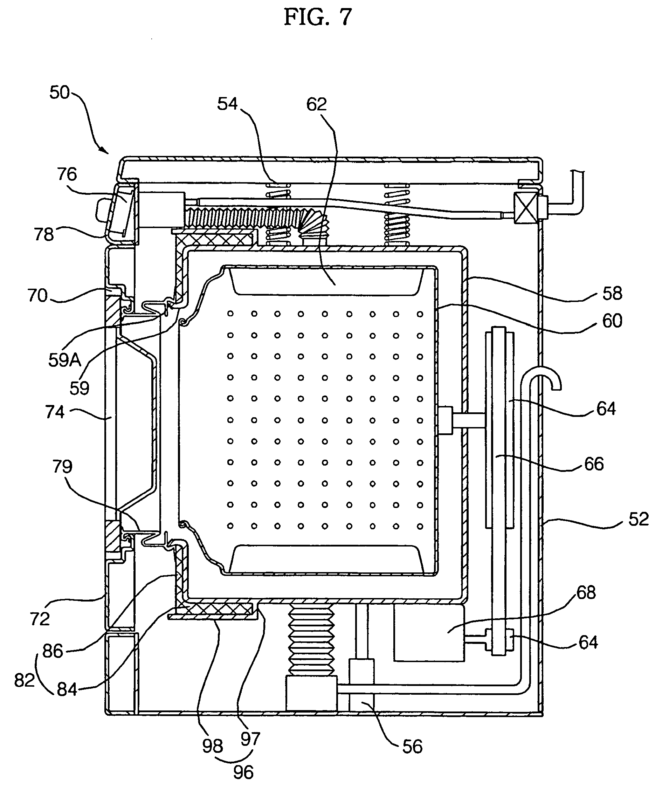

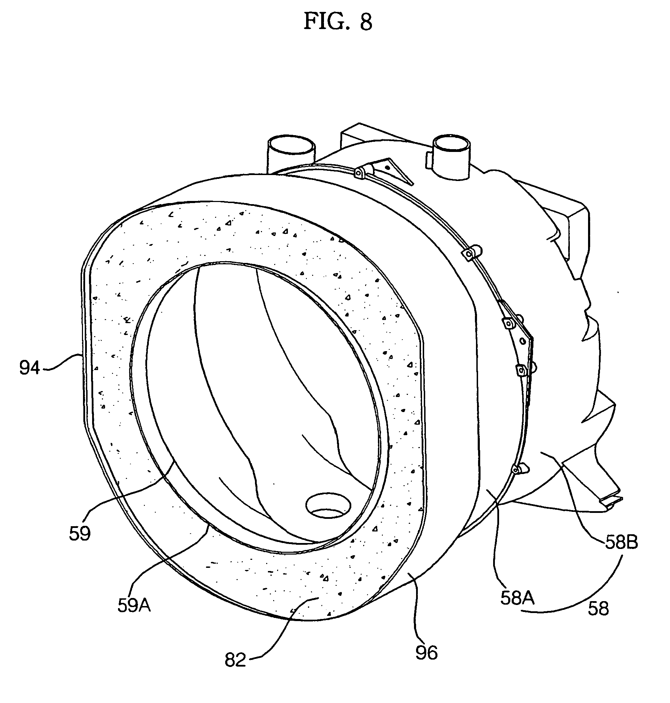

As shown in FIGS. 7 and 8, the tub for drum type washing machines according to the second embodiment is characterized by a tub body 58, which comprises: a front tub 58A having an inlet formed at the front surface thereof and the rear surface of which is opened; and a rear tub 58B attached to the rear surface of the front tub 58A and the front surface of which is opened, and a cylindrical rib 59 disposed around the inlet of the front tub 58A while the cylindrical rib 59 is protruded forward a predetermined height from the front tub 58A.

Components which are identical or similar in construction to those of the first embodiment are indicated by the same reference numerals and a detailed description thereof will not be given.

At the tip end of the cylindrical rib 59 is formed a curling part 59A, to which a gasket 79 is connected. The curling part 59A is bent in such a manner that the curling part 59A is extended outward.

The tub for drum type washing machines according to the second embodiment is also characterized by a weight receiving part 96 comprising: a vertical rib 97 protruded outward from the outer circumferential surface of the front tub 58A along the outer circumference of the front tub 58A while the vertical rib 92 is perpendicular to the outer circumferential surface of the front tub 58A; and a horizontal rib 98 formed such that the horizontal rib 98 is protruded from the tip end of the vertical rib 97 further forward than the front surface of the front tub 58A while the horizontal rib 98 is parallel with the outer circumferential surface of the front tub 58A.

Furthermore, the tub for drum type washing machines according to the second embodiment is characterized by a balance weight 82 comprising: a first weight 84 disposed between the vertical and horizontal ribs 97 and 98 and the outer circumferential surface of the front tub 58A; and a second weight 86 disposed between the vertical and cylindrical ribs 97 and 59 and the front surface of the front tub 58A, the second weight 86 being integrally molded with the first weight 84.

Other components, except the cylindrical rib 59, the weight receiving part 96, and the balance weight 82 are identical in construction to those of the tub for drum type washing machines according to the first embodiment.

The manufacturing process of the tub for drum type washing machined with the above-stated construction according to the second embodiment will be described below. The balance weight 82 is injected into the weight receiving part 96 in a fluid state until the balance weight 82 is filled up to between the tip end of the horizontal rib 98 and the cylindrical rib 59 of the front tub 58A, and is then hardened in the weight receiving part 96. As a result, the balance weight 82 covers the front surface of the front tub 58A.

The thickness of the second weight 86 disposed at the front surface of the front tub 58A is smaller than that of the first weight 84 disposed at the outer circumferential surface of the front tub 58A. Consequently, the provision of space between the balance weight 82 and the cabinet cover 72 is easily accomplished.

According to the second preferred, the balance weight 82 is more stably attached to the tub body 58, and the weight of the balance weight 82 is more greatly increased.

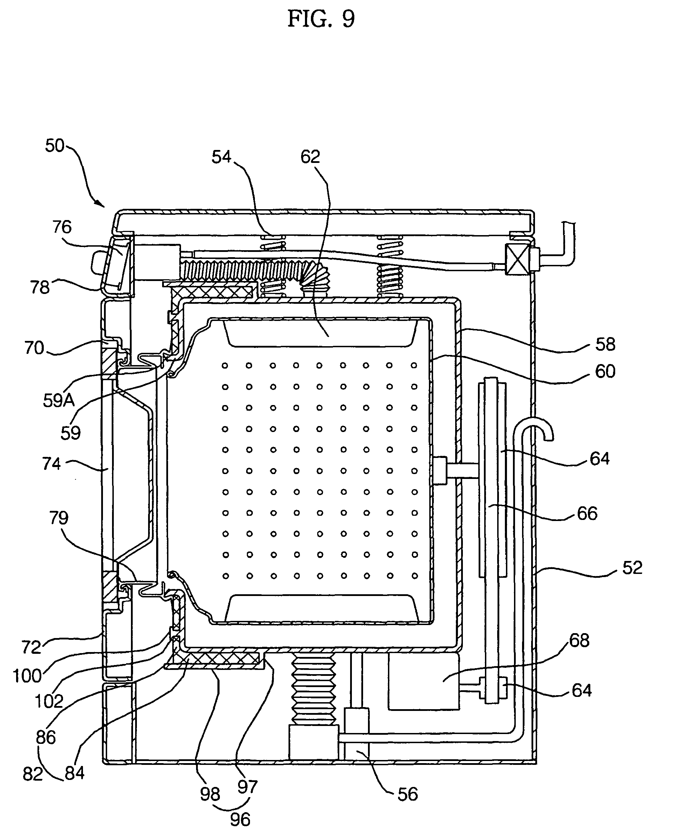

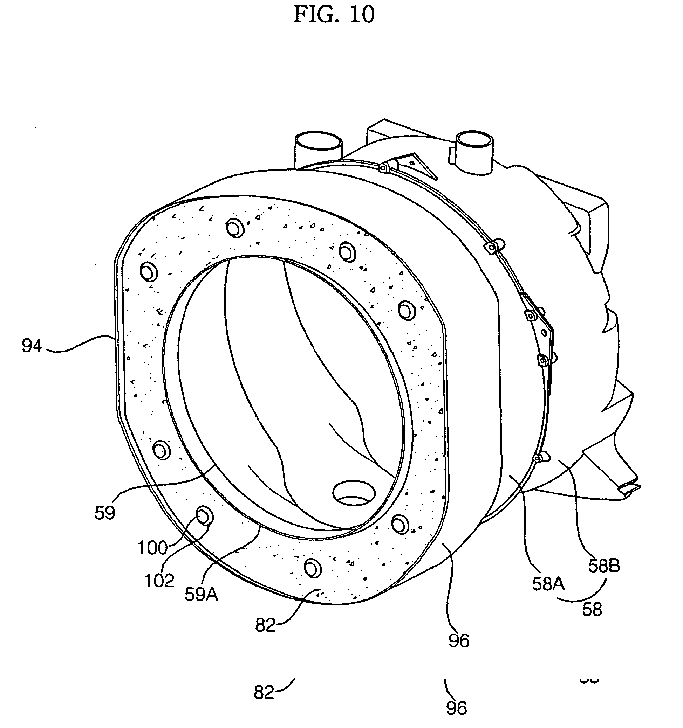

As shown in FIGS. 9 and 10, the tub for drum type washing machines according to the third embodiment is characterized by motion preventing protrusions 100 protruded from the front surface of the front tub 58A for preventing motion of the balance weight 82 received in the weight receiving part 96. Other components of the tub for drum type washing machines according to the third embodiment are identical in construction to those of the tub for drum type washing machines according to the second embodiment.

Specifically, the motion preventing protrusions 100 are protruded forward from the front surface of the front tub 58A, on which the balance weight 82 is disposed. The motion preventing protrusions 100 are arranged at the front surface of the front tub 58A in the circumferential direction while being spaced apart from one another.

At each of the tip ends of the motion preventing protrusions 100 is formed a separation preventing extension 102 for preventing the balance weight 82 from being separated from the front tub 58A. Specifically, the balance weight 82 is caught by the separation preventing extensions 102 such that the balance weight is not separated from the front tub 58A.

As a result, the up-and-down and right-and-left motion and the circumferential rotation of the balance weight 82 is effectively prevented by the motion preventing protrusions 100, and the back-and-forth motion of balance weight 82 is effectively prevented by the separation preventing extensions 102.

Consequently, the balance weight 82 is more securely and stably attached to the tub body 58 by means of the motion preventing protrusions 100 having the separation preventing extensions 102.

Although the embodiments have been disclosed for illustrative purposes, those skilled in the art will appreciate that various modifications, additions and substitutions are possible, without departing from the scope of the invention as disclosed in the claims.

For example, the weight receiving part may be formed at the upper part or the lower part of the tub body based on design conditions of the tub body. Alternatively, the weight receiving part may be partially formed at the side part of the tub body. Furthermore, the weight receiving part may be formed in the shape of a box having an injection port defined by the vertical rib and the horizontal rib.

As apparent from the above description, the tub for washing machines according to the present invention can have the following effects.

The balance weight can be injected into the weight receiving part formed at one side of the tub body, and is then hardened in the weight receiving part. As a result, the balance weight is integrally attached to the tub body, which eliminates the necessity of providing additional fixing units for fixing the balance weight to the tub body, and therefore, the balance weight and the tub are formed in a simple structure.

Since the balance weight is integrally attached to the tub body, and therefore, the necessity of providing the fixing units for fixing the balance weight to the tub body is eliminated, the number of parts is decreased, the manufacturing process of the parts is simplified, and the manufacturing costs of the parts are decreased. Especially, accidental separation of the balance weight from the tub body due to damage to the fixing units is effectively prevented.

Moreover, the weight receiving part can be formed at the outer circumferential surface of the tub body along the outer circumference of the tub body. As a result, the balance weight can be disposed such that the balance weight surrounds the outer circumferential surface of the tub body. Consequently, the rigidity of the tub body due to the balance weight is increased, and therefore, deformation of the tub body or damage to the tub body is effectively prevented.

In addition, the balance weight can be integrally molded between the weight receiving part and the tub body, and the motion preventing protrusions, which are provided at the tip ends thereof with the separation preventing extensions, respectively, are protruded forward from the front surface of the tub body. Consequently, the motion of the balance weight and separation of the balance weight from the tub body are effectively prevented.

Furthermore, the provision of space between the tub body and the cabinet cover can be easily accomplished, and therefore, the collision of the tub body and the cabinet cover can be effectively prevented. Consequently, vibration-preventing design of the drum type washing machine is more easily accomplished. In particular, the present invention is very useful when a drum type washing machine with drying function having a drying duct disposed in front of the tub body is designed. Also, increase in size of the drum type washing machine can be avoided.

## Claims

1. A tub for washing machines, comprising:
a tub body (58);
a weight receiving part (90; 96) formed at the tub body (58); and
a balance weight (80; 82) integrally formed at the weight receiving part (90; 96) by injection molding;
**characterized in that** the weight receiving part (90; 96) is formed integrally at the outer circumferential surface of the tub body (58).

2. The tub as set forth in claim 1, wherein the balance weight (80; 82) is made of a concrete material or a metal material.

3. The tub as set forth in claim 1, wherein the tub body (58) comprises:
a front tub (58A), front and rear surfaces of which are opened; and
a rear tub (58B) attached to the rear surface of the front tub (58A),
the weight receiving part (90; 96) being formed at the front tub (58A) and/or the rear tub (58B).

4. The tub as set forth in claim 1, wherein the weight receiving part (90; 96) is defined by ribs protruded from the tub body (58).

5. The tub as set forth in claim 4, wherein the weight receiving part (90; 96) is formed along the outer circumference of the tub body (58).

6. The tub as set forth in claim 5, wherein the weight receiving part (90; 96) comprises:
a vertical rib (92; 97) protruded outward from the outer circumferential surface of the tub body (58) along the outer circumference of the tub body (58) while the vertical rib (92; 97) is perpendicular to the outer circumferential surface of the tub body (58); and
a horizontal rib (93; 98) protruded forward or rearward from the tip end of the vertical rib (92; 97) while the horizontal rib (93; 98) is parallel with the outer circumferential surface of the tub body (58).

7. The tub as set forth in claim 6, wherein
the tub body (58) is mounted in a cabinet in a shock-absorbing fashion, and
the weight receiving part (90; 96) has collapsed sections (94), which are opposite to both side surfaces of the cabinet, the collapsed sections (94) being collapsed toward the tub body (58).

8. The tub as set forth in claim 6, wherein the horizontal rib (98) is protruded from the tip end of the vertical rib (97) further forward than the front surface of the tub body (58).

9. The tub as set forth in claim 8, wherein
the tub body (58) is provided at the front surface thereof with an inlet, and
the tub further comprises: a cylindrical rib (59) disposed at the inlet of the tub body (58) while the cylindrical rib (59) is protruded forward from the tub body (58).

10. The tub as set forth in claim 9, wherein the balance weight (82) comprises:
a first weight (84) disposed between the vertical and horizontal ribs (97, 98) and the outer circumferential surface of the tub body (58); and
a second weight (86) disposed between the vertical and cylindrical ribs (97, 59) and the front surface of the tub body (58), the second weight (86) being integrally molded with the first weight (84).

11. The tub as set forth in claim 10, further comprising:
at least one motion preventing protrusion (100) protruded from the front surface of the tub body (58) for preventing motion of the balance weight (82).

12. The tub as set forth in claim 11, wherein the at least one motion preventing protrusion (100) is provided at the tip end thereof with a separation preventing extension (102) for preventing the balance weight (82) from being separated from the tub body (58).

## Patentansprüche

1. Bottich für Waschmaschinen, umfassend:
einen Bottichkörper (58),
einen gewichtaufnehmenden Teil (90; 96), der am Bottichkörper ausgeformt ist, und
ein Ausgleichsgewicht (80; 82), das mittels Spritzguss einstückig mit dem Bottichkörper ausgeformt ist,
**dadurch gekennzeichnet, dass** der gewichtaufnehmende Teil einstückig mit der äußeren Umfangsfläche des Bottichkörpers (58) ausgeformt ist.

2. Bottich nach Anspruch 1, wobei das Ausgleichsgewicht (80; 82) aus einem Betonwerkstoff oder einem Metallwerkstoff gefertigt ist.

3. Bottich nach Anspruch 1, wobei der Bottichkörper (58) Folgendes umfasst:
einen vorderen Bottich (58A), dessen Vorder- und Rückfläche offen sind, und
einen hinteren Bottich (58B), der an der Rückfläche des vorderen Bottichs (58A) befestigt ist,
wobei der gewichtaufnehmende Teil (90; 96) am vorderen Bottich (58A) und/oder am hinteren Bottich (58B) ausgeformt ist.

4. Bottich nach Anspruch 1, wobei der gewichtaufnehmende Teil (90; 96) durch Rippen definiert ist, die vom Bottichkörper (58) hervorragen.

5. Bottich nach Anspruch 4, wobei der gewichtaufnehmende Teil (90; 96) entlang des äußeren Umfangs des Bottichkörpers (58) ausgeformt ist.

6. Bottich nach Anspruch 5, wobei der gewichtaufnehmende Teil (90; 96) Folgendes umfasst:
eine vertikale Rippe (92; 97), die nach außen von der äußeren Umfangsfläche des Bottichkörpers (58) entlang des äußeren Umfangs des Bottichkörpers (58) hervorragt, während die vertikale Rippe (92; 97) zur äußeren Umfangsfläche des Bottichkörpers (58) rechtwinkelig ist, und
eine horizontale Rippe (93; 98), die von der Endspitze der vertikalen Rippe (92; 97) vorwärts oder rückwärts hervorragt, während die horizontale Rippe (93; 98) zur äußeren Umfangsfläche des Bottichkörpers (58) parallel ist.

7. Bottich nach Anspruch 6, wobei
der Bottichkörper (58) auf stoßdämpfende Art in einem Schrank befestigt ist, und
der gewichtaufnehmende Teil (90; 96) eingesenkte Abschnitte (94) hat, welche beiden Seitenflächen des Schranks gegenüber liegen, wobei die eingesenkten Teile (94) in Richtung des Bottichkörpers (58) eingesenkt sind.

8. Bottich nach Anspruch 6, wobei die horizontale Rippe (98) von der Endspitze der vertikalen Rippe (97) weiter als die Vorderfläche des Bottichkörpers (58) nach vorne hervorragt.

9. Bottich nach Anspruch 8, wobei
der Bottichkörper (58) an der Vorderfläche davon mit einem Einlass bereitgestellt ist, und
der Bottich des Weiteren eine zylindrische Rippe (59) umfasst, die am Einlass des Bottichkörpers (58) angebracht ist, während die zylindrische Rippe (59) vom Bottichkörper (58) vorwärts hervorragt.

10. Bottich nach Anspruch 9, wobei das Ausgleichsgewicht (82) Folgendes umfasst:
ein erstes Gewicht (84), das zwischen der vertikalen und der horizontalen Rippe (97, 98) und der äußeren Umfangsfläche des Bottichkörpers (58) angebracht ist, und
ein zweites Gewicht (86), das zwischen der vertikalen und der zylindrischen Rippe (97, 59) und der Vorderfläche des Bottichkörpers (58) angebracht ist, wobei das zweite Gewicht (86) einstückig mit dem ersten Gewicht (84) geformt ist.

11. Bottich nach Anspruch 10, des Weiteren umfassend:
zumindest einen bewegungsverhindernden Vorsprung (100) zum Verhindern einer Bewegung des Ausgleichsgewichts (82), der von der Vorderfläche des Bottichkörpers (58) hervorragt.

12. Bottich nach Anspruch 11, wobei der zumindest eine bewegungsverhindernde Vorsprung (100) an der Endspitze davon mit einer trennungsverhindernden Erweiterung (102) zum Verhindern der Trennung von Ausgleichsgewicht (82) und Bottichkörper (58) bereitgestellt ist.

## Revendications

1. Cuve pour lave-linge comprenant :
un corps de cuve (58) ;
une partie de réception du poids (90 ; 96) formée au niveau du corps de cuve (58) ; et
un contrepoids (80 ; 82) formé d'un seul tenant au niveau de la partie de réception du poids (90 ; 96) par moulage par injection ;
**caractérisée en ce que** la partie de réception du poids (90 ; 96) est formée d'un seul tenant au niveau de la surface circonférentielle extérieure du corps de cuve (58).

2. Cuve selon la revendication 1, dans laquelle le contrepoids (80 ; 82) est réalisé en un béton ou en un métal.

3. Cuve selon la revendication 1, dans laquelle le corps de cuve (58) comprend :
une cuve avant (58A), dont les surfaces avant et arrière sont ouvertes ; et
une cuve arrière (58B) fixée à la surface arrière de la cuve avant (58A),
la partie de réception du poids (90 ; 96) étant formée au niveau de la cuve avant (58A) et/ou de la cuve arrière (58B).

4. Cuve selon la revendication 1, dans laquelle la partie de réception du poids (90 ; 96) est définie par des nervures faisant saillie du corps de cuve (58).

5. Cuve selon la revendication 4, dans laquelle la partie de réception du poids (90 ; 96) est formée le long de la périphérie extérieure du corps de cuve (58).

6. Cuve selon la revendication 5, dans laquelle la partie de réception du poids (90 ; 96) comprend :
une nervure verticale (92 ; 97) faisant saillie vers l'extérieur à partir de la surface circonférentielle extérieure du corps de cuve (58) le long de la périphérie extérieure du corps de cuve (58), la nervure verticale (92 ; 97) étant perpendiculaire à la surface circonférentielle extérieure du corps de cuve (58) ; et
une nervure horizontale (93 ; 98) faisant saillie vers l'avant ou vers l'arrière à partir de l'extrémité de la nervure verticale (92 ; 97), la nervure horizontale (93 ; 98) étant parallèle à la surface circonférentielle extérieure du corps de cuve (58).

7. Cuve selon la revendication 6, dans laquelle
le corps de cuve (58) est monté dans une armoire de façon à absorber les chocs, et
la partie de réception du poids (90 ; 96) présente des sections aplaties (94) qui font face aux deux surfaces latérales de l'armoire ; les sections aplaties (94) étant aplaties vers le corps de cuve (58).

8. Cuve selon la revendication 6, dans laquelle la nervure horizontale (98) fait, depuis l'extrémité de la nervure verticale (97), davantage saillie vers l'avant que la surface avant du corps de cuve (58).

9. Cuve selon la revendication 8, dans laquelle
le corps de cuve (58) est prévu au niveau de sa surface avant avec une entrée, et
la cuve comprend en outre : une nervure cylindrique (59) agencée à l'entrée du corps de cuve (58), la nervure cylindrique (59) faisant saillie vers l'avant à partir du corps de cuve (58).

10. Cuve selon la revendication 9, dans laquelle le contrepoids (82) comprend :
un premier poids (84) agencé entre les nervures verticale et horizontale (97, 98) et la surface circonférentielle extérieure du corps de cuve (58) ; et
un second poids (86) agencé entre les nervures verticale et cylindrique (97, 59) et la surface avant du corps de cuve (58), le second poids (86) étant moulé d'un seul tenant avec le premier poids (84).

11. Cuve selon la revendication 10, comprenant en outre :
au moins une saillie empêchant le mouvement (100) dépassant de la surface avant du corps de cuve (58) pour empêcher le mouvement du contrepoids (82).

12. Cuve selon la revendication 11, dans laquelle au moins une saillie empêchant le mouvement (100) est prévue à son extrémité avec une extension empêchant la séparation (102) pour empêcher le contrepoids (82) d'être séparé du corps de cuve (58).
